# EUROPEAN PATENT APPLICATION

(11) **EP 3 211 612 A1**
(43) Date of publication of application: **30.08.2017**
(21) Application number: 17156889.2
(22) Date of filing: 20.02.2017
(51) Int. Cl.: G07G 5/00, G06Q 20/20

(54) **ELECTRONIC RECEIPT SYSTEM**

(30) Priority: 26.02.2016 JP 2016035715
(71) Applicant: Toshiba TEC Kabushiki Kaisha, Tokyo 141-0032 (JP)
(72) Inventor: SUGIYAMA, Koichi, Shinagawa-ku, Tokyo 141-8562 (JP)
(74) Representative: Takeuchi, Maya

(57) **Abstract**

An electronic receipt system includes first and second servers communicating with a user device. The first server is configured to, in response to a first request including a company ID from a user device, transmit screen data including instructions to display on the user device a company screen that includes a link for accessing an electronic receipt service. The second server stores a plurality of electronic receipts, each associated with one of a plurality of company IDs and one of a plurality of member IDs, and in response to requests from the user device, transmits to the user device, screen data including instructions to display on the user device an electronic receipt list screen that includes a list of electronic receipts of the user that are associated with the company ID, wherein the list includes one or more separate links each for requesting one of the retrieved electronic receipts.

## Description

### FIELD

The present invention relates to electronic-receipt making technologies in general, and embodiments described herein relate in particular to an electronic receipt system and a method for providing electronic receipt information, and a non-transitory computer-readable medium and computer program product for enabling such method to be performed.

### BACKGROUND

An electronic receipt service may allow a member of a service to view a digitalized receipt with portable terminal or the like.

In such an electronic receipt service, it is necessary to handle large-capacity data, and thus a considerable capital investment is required in providing the electronic receipt service. For this reason, it may be difficult for a provider such as a company to independently provide an electronic receipt service.

In view of such situations, it is desired that each of a plurality of providers can provide an electronic receipt service from an independent service, which may require only a small capital investment.

To this end, there is provided an electronic receipt system comprising:
a first server configured to:
   in response to a first request from a user device for first screen data, wherein the first request includes a company ID,
   transmit to the user device, the first screen data including instructions to display on the user device a company screen that includes a link for accessing an electronic receipt service; and
a second server that stores a plurality of electronic receipts, each associated with one of a plurality of company IDs and one of a plurality of member IDs, and is configured to:
   in response to a second request from the user device for second screen data,
   wherein the second request includes the company ID included in the first request and a member ID, and is generated using the link on the displayed company screen for accessing the electronic receipt service,
   transmit to the user device, the second screen data including instructions to display on the user device an electronic receipt service home screen that includes a link for requesting electronic receipts, and
   in response to a third request from the user device for electronic receipts, wherein the third request includes the member ID included in the second request, and is generated using the link on the displayed electronic receipt service home screen for requesting electronic receipts,
   retrieve, from the stored plurality of electronic receipts, the electronic receipts that are associated with the member ID included in the third request and one of the plurality of company IDs associated with the member ID, and
   transmit to the user device, third screen data including instructions to display on the user device an electronic receipt list screen that includes a list of each retrieved electronic receipt, wherein the list includes one or more separate links each for requesting one of the retrieved electronic receipts.

Preferably, the second server is further configured to:
in response to a fourth request from the user device for a specific electronic receipt, wherein the fourth request is generated using one of the links from the list on the displayed electronic receipt list screen, transmit to the user device, the specific electronic receipt.

Preferably still, the first screen data is in HTML format, and
the link for requesting electronic receipts is a URL that identifies the second server.

Preferably yet, the second server is further configured to determine whether the third request includes one of the plurality of company IDs, and
when the third request is determined to include one of the plurality of company IDs, the retrieved electronic receipts are electronic receipts that are stored in association with the company ID included in the third request.

Suitably, when the third request is determined to not include one of the plurality of company IDs, the retrieved electronic receipts are electronic receipts that are stored in association with a company ID included in a previous request received by the second server that included the member ID in the third request.

Suitably still, each of the plurality of company IDs represents an individual store.

Suitably yet, each of the plurality of company IDs represents a plurality of associated stores.

The invention also relates to a method of providing electronic receipt information, the method comprising the steps of:
at a first server, in response to a first request from a user device for first screen data, wherein the first request includes a company ID, transmitting to the user device, the first screen data including instructions to display on the user device a company screen that includes a link for accessing an electronic receipt service;
at a second server that stores a plurality of electronic receipts that are each associated with one of a plurality of company IDs and one of a plurality of member IDs, in response to a second request from the user device for second screen data, wherein the second request includes the company ID included in the first request and a member ID, and is generated using the link on the displayed company screen for accessing the electronic receipt service, transmitting to the user device, the second screen data including instructions to display on the user device an electronic receipt service home screen that includes a link for requesting electronic receipts; and
at the second server, in response to a third request from the user device for electronic receipts, wherein the third request includes the member ID included in the second request, and is generated using the link on the displayed electronic receipt service home screen for requesting electronic receipts, retrieving, from the stored plurality of electronic receipts, the electronic receipts that are associated with the member ID included in the third request and one of the plurality of company IDs associated with the member ID, and transmitting to the user device, third screen data including instructions to display on the user device an electronic receipt list screen that includes a list of each retrieved electronic receipt, wherein the list includes one or more separate links each for requesting one of the retrieved electronic receipts.

Preferably, the method further comprises the steps of:
at the second server, in response to a fourth request from the user device for a specific electronic receipt, wherein the fourth request is generated using one of the links from the list on the displayed electronic receipt list screen, transmitting to the user device, the specific electronic receipt.

In the above method, the first screen data is preferably in HTML format, and
the link for requesting electronic receipts is preferably a URL that identifies the second server.

Suitably, the method further comprises the step of:
determining whether the third request includes one of the plurality of company IDs,
wherein, when the third request is determined to include one of the plurality of company IDs, the retrieved electronic receipts are electronic receipts that are stored in association with the company ID included in the third request.

Suitably still, when the third request is determined to not include one of the plurality of company IDs, the retrieved electronic receipts are electronic receipts that are stored in association with a company ID included in a previous request received by the second server that included the member ID in the third request.

Suitably yet, each of the plurality of company IDs represents an individual store.

Suitably further, each of the plurality of company IDs represents a plurality of associated stores.

The invention further relates to a non-transitory computer-readable medium having a program thereon that is executable in a computing device to cause the computing device to perform the method of retrieving electronic receipt information as defined above.

The invention further concerns a computer program product comprising program code means stored on a computer readable medium for performing the method as defined above, when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an example configuration of main components of an electronic receipt system according to an embodiment.
FIG. 2 is a flow chart of a control process performed by a CPU of an information terminal.
FIG. 3 is a flow chart of another control process performed by the CPU of the information terminal.
FIG. 4 is a flow chart of a control process performed by a CPU of a company server.
FIG. 5 is a flow chart of a control process performed by a CPU of a receipt server.

### DETAILED DESCRIPTION

An exemplary embodiment includes an electronic receipt system allowing each of a plurality of providers to provide an electronic receipt service as an independent service by a small capital investment, and a program thereof.

In general, according to one embodiment, an electronic receipt system includes first and second servers communicating with a user device. The first server is configured to, in response to a first request from the user device for first screen data, wherein the first request includes a company ID, transmit to the user device, the first screen data including instructions to display on the user device a company screen that includes a link for accessing an electronic receipt service. The second server stores a plurality of electronic receipts, each associated with one of a plurality of company IDs and one of a plurality of member IDs, and is configured to, in response to a second request from the user device for second screen data, wherein the second request includes the company ID included in the first request and a member ID, and is generated using the link on the displayed company screen for accessing the electronic receipt service, transmit to the user device, the second screen data including instructions to display on the user device an electronic receipt service home screen that includes a link for requesting electronic receipts. The second server is further configured to, in response to a third request from the user device for electronic receipts, wherein the third request includes the member ID included in the second request, and is generated using the link on the displayed electronic receipt service home screen for requesting electronic receipts, retrieve, from the stored plurality of electronic receipts, the electronic receipts that are associated with the member ID included in the third request and one of the plurality of company IDs associated with the member ID, and transmit to the user device, third screen data including instructions to display on the user device an electronic receipt list screen that includes a list of each retrieved electronic receipt, wherein the list includes one or more separate links each for requesting one of the retrieved electronic receipts. [0007]Hereinafter, an electronic receipt system according to an embodiment will be described with reference to the accompanying drawings.

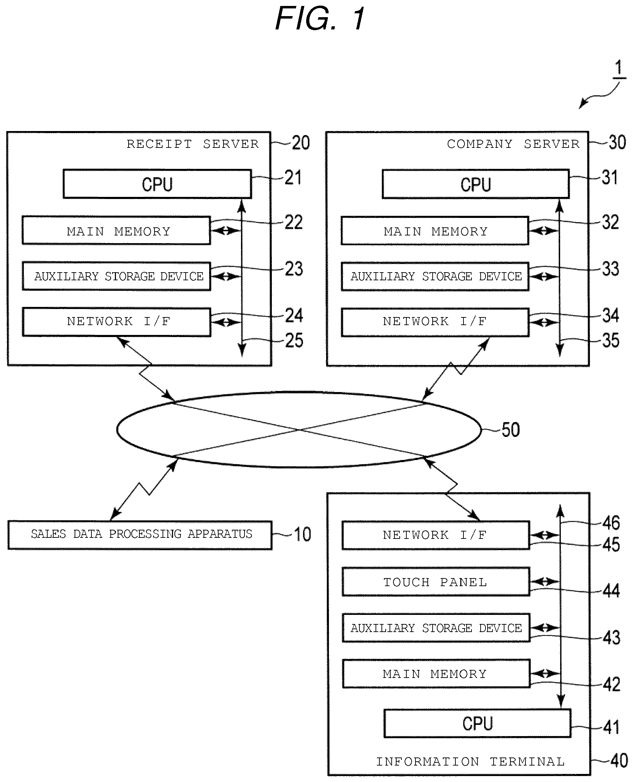

FIG. 1 is a block diagram illustrating an example configuration of main components of an electronic receipt system 1 according to the embodiment. The electronic receipt system 1 includes a sales data processing apparatus 10, a receipt server 20, a company server 30, and an information terminal 40, each connected to a network 50.

The sales data processing apparatus 10 is installed in a store, such as a supermarket, for business such as settlement of merchandise purchases. In FIG. 1, only one sales data processing apparatus 10 is illustrated, but a plurality of sales data processing apparatuses 10 are actually included in the electronic receipt system 1. The sales data processing apparatuses 10 are installed in each of a plurality of stores, for example. The sales data processing apparatus 10 is, for example, a point of sales (POS) terminal, an electronic cash register, or the like. The sales data processing apparatus 10 is typically operated by a salesperson. However, a self-service type which is operated by a shopper may be used as the sales data processing apparatus 10. In addition, a semi-self service type may also be used in which a registration unit performing registration and a settlement unit performing settlement are separated from each other, so that the registration unit is operated by a salesperson, and the settlement unit is operated by a shopper. The sales data processing apparatus 10 determines that a shopper is a member of an electronic receipt service by reading a barcode having a membership ID (identifier) recorded thereon by a scanner connected to the sales data processing apparatus 10 during settlement of the transaction. The membership ID is individually allocated for each member of an electronic receipt service. The sales data processing apparatus 10 transmits business transaction data including contents of a settled transaction to the receipt server 20 in order to issue an electronic receipt when the shopper is a member of an electronic receipt service. The business transaction data also includes a membership ID and a company ID individually allocated for each company that operates a store. Meanwhile, the company ID can be included in the business transaction data by being stored in the sales data processing apparatus 10 in advance.

The receipt server 20 stores electronic receipt data based on the business transaction data transmitted from each of the sales data processing apparatuses 10 installed in a plurality of stores operated by a plurality of companies. In addition, the receipt server 20 allocates individual receipt IDs to the electronic receipt data stored therein, and manages the receipt IDs and the electronic receipt data in association with each other. Therefore, in the electronic receipt system 1, the receipt server 20 stores and manages electronic receipt data indicating contents of a business transaction for each of the plurality of companies, and for each member of an electronic receipt service.

The receipt server 20 includes a central processing unit (CPU) 21, a main memory 22, an auxiliary storage device 23, a network I/F (interface) 24, and a bus 25.

The CPU 21 may be a processor of a computer. The CPU 21 controls each unit for realizing various functions of the receipt server 20 based on programs, such as an operating system and application software, which are stored in the main memory 22.

The main memory 22 is may be a main storage portion of the computer. The main memory 22 stores programs such as an operating system and application software. The programs stored in the main memory 22 include a control program for controlling the receipt server 20. In addition, the main memory 22 stores data to be referred to when the CPU 21 performs various processes. Further, the main memory 22 stores data which is temporarily used when the CPU 21 performs various processes, and serves as a so-called work area.

The auxiliary storage device 23 may be an auxiliary storage portion of the computer. The auxiliary storage device 23 is, for example, an electric erasable programmable read-only memory (EEPROM), a hard disc drive (HDD), a solid state drive (SSD), or the like. The auxiliary storage device 23 stores data used when the CPU 21 performs various processes, data generated by processing performed by the CPU 21, or the like. The auxiliary storage device 23 may also store the above-mentioned programs such as an operating system and an application. The auxiliary storage device 23 stores electronic receipt data in association with a membership ID and a company ID.

The programs stored in the main memory 22 or the auxiliary storage device 23 include a control program for a control process to be described later. As an example, the receipt server 20 is provided for an electronic receipt service provider in a state where the control program is stored in the main memory 22 or the auxiliary storage device 23. However, the receipt server 20 may be provided to the provider in a state where the control program is not stored in the main memory 22 or the auxiliary storage device 23. A control program separately transferred to the receipt server 20 may be written in the main memory 22 or the auxiliary storage device 23 under the operation of the user, a serviceperson, or the like. The transfer of the control program at this time can be realized by being recorded in a removable recording medium such as a magnetic disk, a magneto-optical disc, an optical disc, or a semiconductor memory, or by downloading through a network.

The network I/F 24 performs interfacing so that the receipt server 20 performs communication through the network 50. That is, the network I/F 24 is an example of a communication interface.

The bus 25 includes an address bus, a data bus, and the like, and transmits signals which are transmitted and received by units of the receipt server 20.

The company server 30 distributes contents, such as a web page or an application provided by a company operating a store, through the network 50. In FIG. 1, only one company server 30 is illustrated, but the number of company servers is not limited to one. For example, a plurality of company servers 30 may be included in the electronic receipt system 1, and each of the company servers 30 may distribute contents provided by a different one of the plurality of companies.

The company server 30 includes a CPU 31, a main memory 32, an auxiliary storage device 33, a network I/F 34, and a bus 35.

The CPU 31 may be a processor of a computer. The CPU 31 controls each unit for realizing various functions of the company server 30 based on programs, such as an operating system and application software, which are stored in the main memory 32.

The main memory 32 may be a main storage portion of the computer. The main memory 32 stores programs such as an operating system and application software. The programs stored in the main memory 32 include a control program for controlling the company server 30. In addition, the main memory 32 stores data to be referred to when the CPU 31 performs various processes. Further, the main memory 32 stores data which is temporarily used when the CPU 31 performs various processes, and is used as a so-called work area.

The auxiliary storage device 33 may be an auxiliary storage portion of the computer. The auxiliary storage device 33 is, for example, an EEPROM, an HDD, an SSD, or the like. The auxiliary storage device 33 stores data used when the CPU 31 performs various processes, data generated by processing performed by the CPU 31, or the like. The auxiliary storage device 33 may also store the above-mentioned programs such as an operating system and an application.

The programs stored in the main memory 32 or the auxiliary storage device 33 include a control program for a control process to be described later. As an example, the company server 30 is provided to a company in a state where the control program is stored in the main memory 32 or the auxiliary storage device 33. However, the company server 30 may be transferred to the company in a state where the control program is not stored in the main memory 32 or the auxiliary storage device 33. A control program separately transferred to the store server 20 may be written in the main memory 32 or the auxiliary storage device 33 under the operation of a user, a serviceperson, or the like. The transfer of the control program at this time can be realized by being recorded in a removable recording medium such as a magnetic disk, a magneto-optical disk, an optical disk, or a semiconductor memory, or by downloading through a network.

The network I/F 34 is a communication interface allowing the company server 30 to perform communication through the network 50.

The bus 35 includes an address bus, a data bus, and the like, and transmits signals which are transmitted and received by units of the company server 30.

The information terminal 40 is an information processing apparatus having a communication function, and may be a portable information terminal such as a smartphone, a mobile phone, or a tablet personal computer (PC). The information terminal 40 may also be a stationary computer such as a desktop PC, a notebook PC, or the like.

A member of an electronic receipt service can acquire electronic receipt data from the receipt server 20 and view a digitalized receipt by using the information terminal 40.

The information terminal 40 includes a CPU 41, a main memory 42, an auxiliary storage device 43, a touch panel 44, a network I/F 45, and a bus 46.

The CPU 41 may be a processor of a computer. The CPU 41 controls each unit for realizing various functions of the information terminal 40 based on programs, such as an operating system and application software, which are stored in the main memory 42.

The main memory 42 may be a main storage portion of the computer. The main memory 42 stores the programs such as an operating system and application software. The programs stored in the main memory 42 include a control program for controlling the information terminal 40. In addition, the main memory 42 stores data to be referred to when the CPU 41 performs various processes. Further, the main memory 42 stores data which is temporarily used when the CPU 41 performs various processes, and is used as a so-called work area.

The auxiliary storage device 43 may be an auxiliary storage portion of the computer. The auxiliary storage device 43 is, for example, an EEPROM, an HDD, an SSD, or the like. The auxiliary storage device 43 stores data used when the CPU 41 performs various processes, data generated by processing performed by the CPU 41, or the like. The auxiliary storage device 43 may also store the above-mentioned programs such as an operating system and an application. In addition, the auxiliary storage device 43 stores a cookie for the receipt server 20. When the information terminal 40 is logged in to an electronic receipt service, a membership ID and a password for logging in to the electronic receipt service are included in the cookie.

The programs stored in the main memory 42 or the auxiliary storage device 43 include application software provided by each company operating a store (hereinafter, referred to as a "company application"), and a web browser. As an example, the information terminal 40 is provided to a user in a state where the company application is not stored in the main memory 42 or the auxiliary storage device 43. A company application separately provided to the user may be written in the main memory 42 or the auxiliary storage device 43 under the operation of the user, a serviceperson, or the like. However, the information terminal 40 may be transferred to the user in a state where the company application is stored in the main memory 42 or the auxiliary storage device 43. In addition, as an example, the information terminal 40 is transferred to the user in a state where the web browser is stored in the main memory 42 or the auxiliary storage device 43. However, the information terminal 40 may be transferred to the user in a state where the web browser is not stored in the main memory 42 or the auxiliary storage device 43. A web browser separately transferred to the user may be written in the main memory 42 or the auxiliary storage device 43 under the operation of the user, a serviceperson, or the like. The transfer of the company application or the web browser can be realized by being recorded in a removable recording medium such as a magnetic disk, a magneto-optical disc, an optical disc, or a semiconductor memory, or by downloading through a network.

The touch panel 44 functions as a display device that displays a screen for notifying an operator of the information terminal 40 of various pieces of information. In addition, the touch panel 44 functions as an input device that receives the operator's touch operation.

The network I/F 45 is a communication interface that the information terminal 40 uses to perform communication through the network 50.

The bus 46 includes an address bus, a data bus, and the like, and transmits signals which are transmitted and received by units of the information terminal 40.

The network 50 is a communication network such as the Internet. The network 50 may further include a mobile phone line network such as 3rd generation (3G) or long term evolution (LTE), a local area network (LAN), a dedicated line, or other communication lines. Meanwhile, in the electronic receipt system 1, as an example, a hypertext transfer protocol (HTTP) as a communication protocol is used for communication between the receipt server 20 or the company server 30 and the information terminal 40 through the network 50. Therefore, a request to be described in the following description of operation is an HTTP request, and a response is an HTTP response. In addition, a URL (uniform resource locator) of an access destination, and the like are written in a request line of the HTTP request.

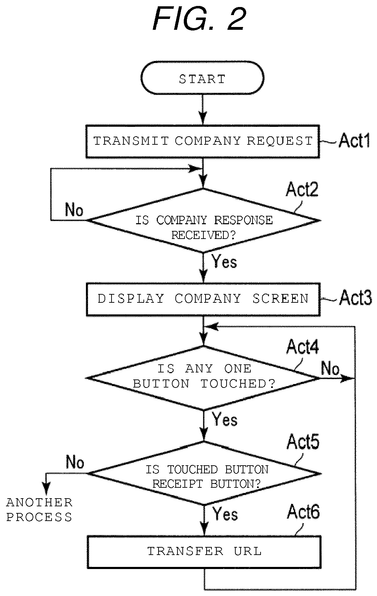

Hereinafter, operations of the receipt server 20, the company server 30, and the information terminal 40 will be described with reference to FIGS. 2 to 5. Meanwhile, contents of processes to be described below are just examples, and various processes capable of obtaining the same effects can be appropriately used.

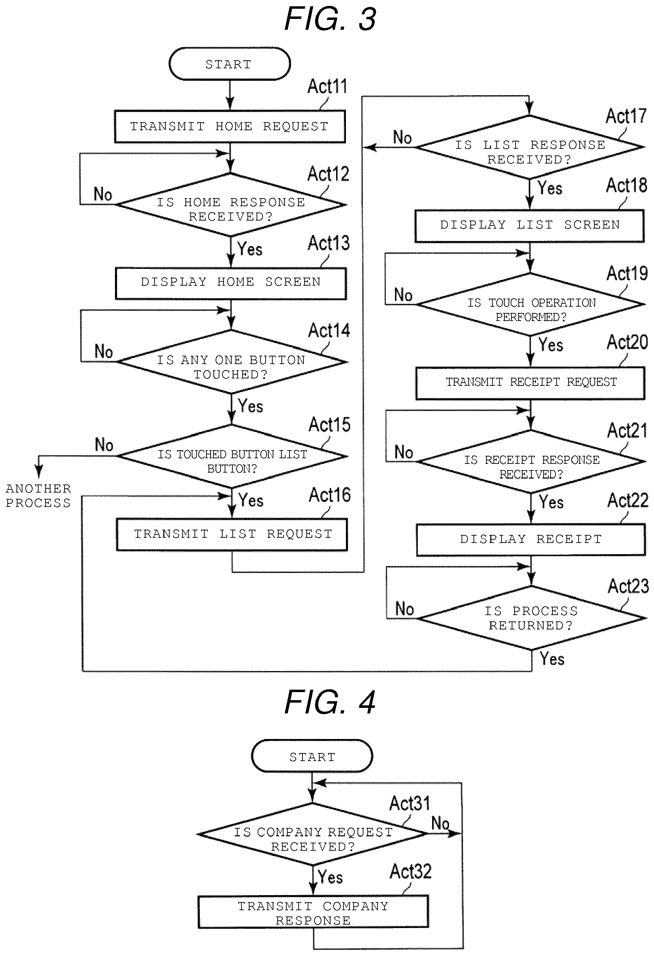

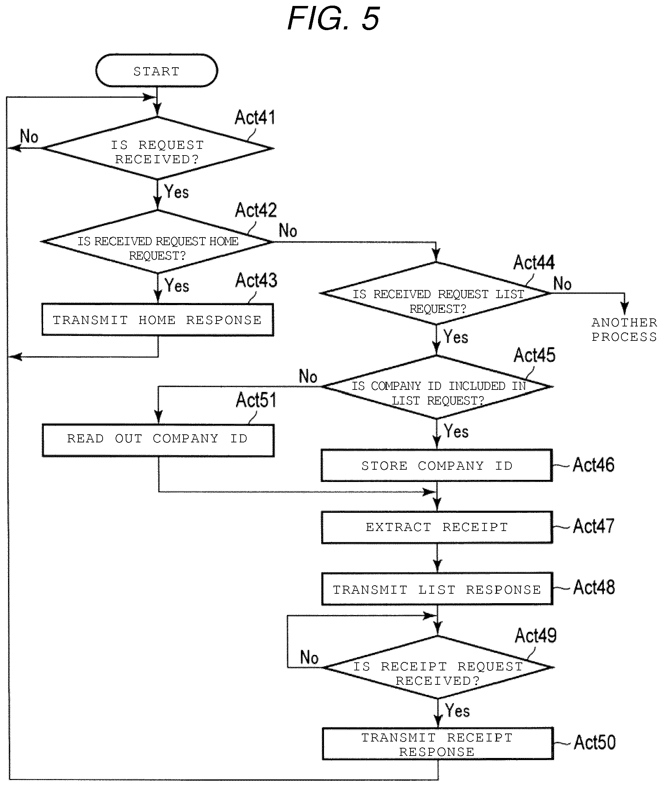

FIGS. 2 and 3 are flow charts of a control process performed by the CPU 41. The CPU 41 performs the control process of FIG. 2 based on a company application stored in the main memory 42 or the auxiliary storage device 43. The CPU 41 performs the control process of FIG. 3 based on a web browser stored in the main memory 42 or the auxiliary storage device 43. FIG. 4 is a flow chart of a control process performed by the CPU 31. The CPU 31 performs the control process based on a control program stored in the main memory 32 or the auxiliary storage device 33. FIG. 5 is a flow chart of a control process performed by the CPU 21. The CPU 21 performs the control process based on a control program stored in the main memory 22 or the auxiliary storage device 23.

When a member of an electronic receipt service desires to view a receipt through a company application, the member operates the information terminal 40 to execute the company application. The CPU 41 starts the control process illustrated in FIG. 2 based on the company application instruction.

In Act1 of FIG. 2, the CPU 41 generates a company request and sends the company request to the network 50 through the network I/F 45. The company request is information for requesting the company server 30 to transmit company screen data indicating a company screen to be first displayed by the company application. For this reason, the CPU 41 includes a domain name of the company server 30 and a company URL indicating a path for identifying the company screen data by the company server 30 in a request line of the company request.

The company request is transmitted to the company server 30 by the network 50 in accordance with the domain name shown in the company URL. Then, in the company server 30, the network I/F 34 receives the company request.

On the other hand, in the company server 30, the CPU 31 performs the control process illustrated in FIG. 4.

In Act31, the CPU 31 waits for the reception of a company request by the network I/F 34. When the company request is received as described above, the CPU 31 determines Yes in Act31 and proceeds to Act32.

In Act32, the CPU 31 generates a company response and sends the company response to the network 50 through the information terminal 40 from the network I/F 34. The company response is information for providing company screen data to the information terminal 40 as a response to the company request. Consequently, the CPU 31 includes company screen data, which is specified by a company URL included in the company request, in the company response. The company screen data has a data format that enables a company application to display the company screen data, and is data in, for example, a hypertext markup language (HTML) format.

The company screen includes a plurality of buttons. As an example, a link for having access to a content provided by the company server 30 is included in one or more of the buttons. One of the plurality of buttons is a receipt button in which a home URL is set as a link for having access to an electronic receipt service provided by the receipt server 20. A domain name for identifying the receipt server 20 on the network 50 is included in the home URL which is set in the receipt button. In addition, a query character string is added to the end of the home URL, as a parameter indicating a company ID. The following URL is an example of a home URL which is included in a receipt button. http://www.example.com/index.html?co=A0001

Here, the mark "?" and the subsequent characters are a query character string. Here, as an example, the name of a variable is set to be co, and a value thereof is set to be A0001. A0001 is an example of a company ID. Meanwhile, a plurality of company IDs may be desired to be included in a case where a company application is provided by a company group constituted by a plurality of companies, and the like. In this case, for example, a plurality of company IDs can be included by writing the company IDs being separated by a comma such as: co=A0001, A0002.

The company server 30 stores company screen data including a receipt button, having a home URL set therein, in the auxiliary storage device 33 in advance.

On the other hand, the CPU 41 of the information terminal 40 finishes sending the company request in Act1 of FIG. 2 and then proceeds to Act2.

In Act2, the CPU 41 waits for the reception of a company response. When the company response sent from the company server 30 and transmitted by the network 50 is received by the network I/F 45, the CPU 41 determines Yes in Act2 and proceeds to Act3.

In Act3, the CPU 41 generates an image corresponding to a company screen based on the company screen data included in the company response, and controls the touch panel 44 to display the image. A member touches any one of the plurality of buttons included in the company screen. When the member desires to view an electronic receipt, the member touches a receipt button among the plurality of buttons.

In Act4, the CPU 41 waits for the touch of any one button included in the company screen. When any one button included in the company screen is touched, the CPU 41 determines Yes in Act4 and proceeds to Act5.

In Act5, the CPU 41 confirms whether or not the touched button is a receipt button. When the touched button is a receipt button, the CPU 41 determines Yes in Act5 and proceeds to Act6. Meanwhile, when the touched button is another button, the CPU 41 determines No in Act5 and performs another process based on the touched button.

In Act6, the CPU 41 transfers a home URL to a web browser.

According to this process, the CPU 41 starts the control process illustrated in FIG. 3 based on the web browser. In this control process, the CPU 41 uses the home URL transferred from the control process based on the company application. The CPU 41 may perform the two control processes illustrated in FIGS. 2 and 3 in parallel. For example, when the CPU 41 starts the control process illustrated in FIG. 3, the CPU 41 may perform the process of Act6 of FIG. 2 and then returns to Act4 to operate the company application in the background. Alternatively, the CPU 41 may terminate the control process illustrated in FIG. 2 in association with the start of the control process illustrated in FIG. 3.

In Act11 of FIG. 3, the CPU 41 generates a home request and sends the home request to the network 50 through the network I/F 45. The home request is information for requesting the receipt server 20 to transmit home screen data indicating a home screen to be first displayed in an electronic receipt service. For this reason, the CPU 41 includes a home URL in a request line of the home request. In addition, the CPU 41 includes a cookie for the receipt server 20 which is stored in the auxiliary storage device 43, in the home request. Meanwhile, in this embodiment, a description will be given on the assumption that the information terminal 40 is logged in to an electronic receipt service. That is, a membership ID and a password are included in the cookie. Similarly, the CPU 41 includes a cookie for the receipt server 20 with respect to other HTTP requests, to be described below, which have the receipt server 20 set as an access destination.

The home request is transmitted to the receipt server 20 by the network 50 in accordance with the domain name shown in the home URL. In this case, in the receipt server 20, the network I/F 24 receives the home request.

On the other hand, in the receipt server 20, the CPU 21 performs the control process illustrated in FIG. 5.

In Act41, the CPU 21 waits for the reception of an HTTP request by the network I/F 24. When any HTTP request is received, the CPU 21 determines Yes in Act41 and proceeds to Act42. Meanwhile, when any HTTP request is received, the CPU 21 confirms whether or not a membership ID and a password are included in the above-mentioned cookie, and confirms whether or not the information terminal 40 is logged in to the electronic receipt service.

In Act42, the CPU 21 confirms whether or not the received request is a home request. When the home request is received as described above, the CPU 21 determines Yes in Act42 and proceeds to Act43.

In Act43, the CPU 41 generates a home response and sends the home response to the network 50 through the information terminal 40 from the network I/F 45. The home response is information for providing home screen data to the information terminal 40 as a home request. Consequently, the CPU 21 includes home screen data for displaying a home screen, which is specified by a home URL, in the home response. The home screen data has a data format that enables a web browser to display the home screen data, and is data in, for example, an HTML format.

As an example, the home screen includes a plurality of buttons in each of which a link is set. One of the plurality of buttons is a list button in which a list URL is set as a link for accessing list screen data indicating a list of electronic receipt data. A domain name for identifying the receipt server 20 on the network 50 is included in the list URL which is set in the list button. In addition, the same query character string as that added to the end of the home URL is added to the end of the list URL. As an example, the other buttons are buttons in which links for having access to other web pages regarding the electronic receipt service are respectively set.

On the other hand, the CPU 41 of the information terminal 40 sends the home request in Act11 of FIG. 3 and then proceeds to Act12.

In Act12, the CPU 41 waits for the reception of a home response. When the home response sent from the company server 30 and transmitted by the network 50 is received by the network I/F 45, the CPU 41 determines Yes in Act12 and proceeds to Act13.

In Act13, the CPU 41 generates an image corresponding to a home screen based on the home screen data included in the home response, and control the touch panel 44 to display the image. A member touches any one of the plurality of buttons included in the home screen. When the member desires to view a list screen showing a list of pieces of electronic receipt data, the member touches the list button.

In Act14, the CPU 41 waits for the touch of any one of the buttons included in the home screen. When any one of the buttons included in the home screen is touched, the CPU 41 determines Yes in Act14 and proceeds to Act15.

In Act15, the CPU 41 confirms whether or not the touched button is the list button. When the touched button is the list button, the CPU 41 determines Yes in Act15 and proceeds to Act16. Meanwhile, when the touched button is another button, the CPU 41 determines No in Act16 and performs other processes according to the touched button.

In Act16, the CPU 41 generates a list request and sends the list request to the network 50 through the network I/F 45. The list request is information for requesting the receipt server 20 to transmit list screen data indicating a list screen. For this reason, the CPU 41 includes a list URL, which is set in the list button, in a request line of the list request.

The list request is transmitted to the receipt server 20 over the network 50 in accordance with a domain name shown in the list URL. Then, in the receipt server 20, the network I/F 24 receives the list request. In this manner, the network I/F 24 receives request information transmitted from an information terminal.

On the other hand, the CPU 21 of the receipt server 20 sends the home response in Act43 of FIG. 5 and then returns to Act41. When the list request is received as described above, the CPU 21 determines Yes in Act41, determines No in Act42, and proceeds to Act44.

In Act44, the CPU 21 confirms whether or not the received request is the list request. When the received request is the list request, the CPU 21 determines Yes in Act44 and proceeds to Act45. Meanwhile, when the received request is not the list request, the CPU 21 performs other processes according to the request.

In Act45, the CPU 21 confirms whether or not a company ID is included in the list request. In the description so far, it is assumed that the company ID is included in the list request. Therefore, here, the CPU 21 determines Yes in Act45 and proceeds to Act46. However, the information terminal 40 can send a list request in which a list URL, having a query not added to the end thereof, is described in a request line by a method using a bookmark function or the manual input of a URL. When the list request does not include the company ID, the CPU 21 performs determination in order to perform a process different from that when the list request includes the company ID.

In Act46, the CPU 21 stores the company ID, which is included in the list request, in an auxiliary storage device in association with a membership ID. Meanwhile, when a company ID is previously stored in association with the membership ID, the company ID is stored by being overwritten.

In Act47, the CPU 21 extracts electronic receipt data specified by the company ID and the membership ID, among the different electronic receipt data stored in the auxiliary storage device 23. The company ID is included in a query character string at the end of a list URL, and the membership ID is included in a cookie. In the process of Act47, electronic receipt data regarding a business transaction made by a company specified by the company ID and an operator determined by the membership ID is extracted. Therefore, in this process, the CPU 21 specifies a company based on the company ID included in the list request. Likewise, in this process, the CPU 21 determines an operator of the information terminal 40 based on the membership ID included in the cookie. Meanwhile, the CPU 21 determines the operator based on the membership ID, and thus regards a member specified by the membership ID as the operator even when a member other than the member specified by the membership ID is the actual operator. In addition, the CPU 21 in the process of Act47 extracts electronic receipt data regarding a business transaction made by the specified company and the determined operator.

In Act48, the CPU 21 generates a list response and sends the list response to the network 50 through the information terminal 40 from the network I/F 24. The list response is information for providing list screen data to the information terminal 40 as a response to the list request. Consequently, the CPU 21 includes list screen data for displaying the list screen showing a list of the electronic receipt data extracted, in the list response. The list screen data has a data format that enables a web browser to display the list screen data, and is data in, for example, an HTML format. The CPU 21 in the process of transmitting a list response controls the network I/F 24. In this process, the CPU 21 and the network I/F 24 transmit list information indicating a list of receipt data.

Receipts specified by a membership ID and a company ID are displayed in a list on the list screen displayed based on the list screen data. As an example, a receipt ID, a date and time of purchase, a purchase store, and the like which are included for each electronic receipt data shown on the list screen.

On the other hand, the CPU 41 of the information terminal 40 sends the list request in Act16 of FIG. 3 and then proceeds to Act17.

In Act17, the CPU 41 waits for the reception of the list response by the network I/F 24. When the list response sent from the receipt server 20 and transmitted by the network 50 is received by the network I/F 45, the CPU 41 determines Yes in Act17 and proceeds to Act 18.

In Act18, the CPU 41 generates an image corresponding to the list screen based on list screen data included in the list response, and instructs the touch panel 44 to display the image.

A member performs an operation for designating an electronic receipt that the member desires to view by the touch panel 44 on the list screen. Specifically, the member performs a touch operation on the touch panel 44 for touching a region in which a receipt ID, a date and time of purchase, a purchase store, and the like with respect to an electronic receipt are displayed. A receipt URL to be linked to a receipt screen having a digitalized receipt to be viewed by the member is set in each region. The receipt URL includes a domain name for identifying the receipt server 20 on the network 50.

In Act19, the CPU 41 waits for the execution of the above-mentioned touch operation. When the touch operation is performed, the CPU 41 determines Yes in Act19 and proceeds to Act20.

In Act20, the CPU 41 generates a receipt request and sends the receipt request to the network 50 through the network I/F 45. The receipt request is information for requesting the receipt server 20 to transmit receipt screen data indicating a receipt screen. For this reason, the CPU 41 includes a receipt URL, which is set in each region of the list screen, in a request line of the receipt request. In addition, the receipt request includes a receipt ID allocated to the electronic receipt data corresponding to a region touched on the list screen. As an example, the receipt ID is included in the receipt request by being added to the end of a URL, which is written in the request line of the receipt request, as a query character string.

The receipt request is transmitted to the receipt server 20 by the network 50 in accordance with a domain name shown in a home URL. Then, in the receipt server 20, the network I/F 24 receives the receipt request.

On the other hand, the CPU 21 of the receipt server 20 sends the list response in Act48 of FIG. 5 and then proceeds to Act49.

In Act49, the CPU 21 waits for the reception of the receipt request by the network I/F 24. When the receipt request is received as described above, the CPU 21 determines Yes in Act49 and proceeds to Act50.

In Act50, the CPU 21 generates a receipt response and sends the receipt response to the network 50 through the information terminal 40 from the network I/F 24. The receipt response is information for providing receipt screen data to the information terminal 40 as a response to the receipt request. Consequently, the CPU 21 includes receipt screen data for displaying the receipt screen corresponding to electronic receipt data specified by the receipt ID included in the receipt request, in the receipt response. The receipt screen data has a data format that enables a web browser to display the receipt screen data, and is data in, for example, an HTML format. The CPU 21 performs the process of Act50 and then returns to Act41.

On the other hand, the CPU 41 of the information terminal 40 sends the receipt request in Act20 of FIG. 3 and then proceeds to Act21.

In Act21, the CPU 41 waits for the reception of the receipt response by the network I/F 24. When the receipt response sent from the receipt server 20 and transmitted by the network 50 is received by the network I/F 45, the CPU 41 determines Yes in Act21 and proceeds to Act22.

In Act22, the CPU 41 generates an image corresponding to a receipt screen based on receipt screen data included in the receipt response, and controls the touch panel 44 to display the image.

As an example, an electronic receipt generated based on electronic receipt data and a return button to be touched by an operator when the display of the receipt screen is terminated are displayed on the receipt screen.

In Act23, the CPU 41 waits for the execution of an instruction for the termination of display of the receipt screen. That is, the CPU 41 confirms whether or not a predetermined operation for the termination of display of the receipt screen, such as the touch of the return button displayed on the touch panel 44, is performed. When the operation for the termination of display of the receipt screen is performed, the CPU 41 determines Yes in Act23 and returns to Act16.

As described above, the information terminal 40 can send the list request not including the company ID. When the list request is received, the CPU 21 determines No in Act45 and proceeds to Act51.

In Act51, the CPU 41 reads out a company ID stored in an auxiliary storage device in association with the membership ID. The CPU 41 performs the process of Act51 and then proceeds to Act47, and performs the subsequent processes by using the company ID read out in Act51, instead of a company ID included in the list request. The company ID is used when electronic receipt data is finally extracted with respect to the member.

Subsequently, the CPU 41 performs the process of Act47 and the subsequent processes as described above.

Although not shown in the drawing, in FIGS. 2 and 3, the CPU 41 waits for the execution of a predetermined operation for the termination of the company application or the web browser. When the operation is performed, the CPU 41 terminates the company application or the web browser.

According to the receipt server 20, it is possible to present a list, obtained by extracting electronic receipt data regarding a business transaction made by a specific company and an operator of the information terminal 40 among a plurality of electronic receipt data indicating contents of business transactions respectively made by a plurality of companies, to the above-mentioned operator with the information terminal 40. This is the same as the reception of an independent electronic receipt service of the specific company from the viewpoint of the operator. That is, according to the receipt server 20, it is possible to provide an electronic receipt service such as an independent electronic receipt service of each company with respect to each of the plurality of companies. Since each company does not need to individually operate the receipt server 20, it is possible to reduce a capital investment related to the provision of the electronic receipt service. Meanwhile, in the above-described embodiment, a request to the receipt server 20 is started in accordance with an operation by the information terminal 40 based on a service, a content, or the like provided by each company. Thus the operator of the information terminal 40 experiences the electronic receipt service as if the electronic receipt service is independently provided by the specific company.

In addition, according to the receipt server 20, when the company ID is not included in the list request, electronic receipt data of the company can be extracted by referring to a company ID which was extracted at a previous time with respect to a membership ID included in a cookie included in the list request. Therefore, in the information terminal 40, even when a list request using a bookmark function or the manual input of a URL is sent, the receipt server 20 can extract electronic receipt data of a specific company. For this reason, a member of an electronic receipt service can view the same list screen as that when the member viewed the list screen at a previous time.

The above-described embodiment can be modified as follows.

A store ID allocated for each store may be used instead of the company ID. In this case, it is possible to extract electronic receipt data for only a specific store.

In the above-described embodiment, when a company ID is not included in a list request, the same company ID as that for electronic receipt data which is previously extracted with respect to the member is used instead of a company ID included in the list request. However, when a company ID is not included in the list request, a list image may be set as an image indicating a list of all pieces of electronic receipt data identified by a membership ID.

In the above-described embodiment, a company ID is transmitted to the receipt server 20 by being added as a query character string. However, the company ID may be transmitted to the receipt server 20 by another method. For example, a company ID is transmitted to the receipt server 20 by being included in a header or a message body of an HTTP request. Alternatively, a company ID may be transmitted in a separate request.

A protocol other than an HTTP may be used for communication between the company server 30 or the information terminal 40 and the receipt server 20. In addition, screen data may have a data format other than HTML. However, it is preferable that the data format of the screen data is a data format that enables a web browser to display the screen data.

A screen displayed when a receipt button is touched may be a list screen. For example, a list URL is set in a receipt button, and thus it is possible to perform the display of the list screen without going through the display of a home screen by omitting Act11 to Act15 of FIG. 3. In addition, a screen having a link to the list screen set therein is not limited to the company screen and the home screen. The information terminal 40 may display the list screen through the screen.

In the above-described embodiment, two applications of a company application and a web browser are used. However, all processes may be performed by using only any one application.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An electronic receipt system comprising:
a first server configured to:
in response to a first request from a user device for first screen data, wherein the first request includes a company ID,
transmit to the user device, the first screen data including instructions to display on the user device a company screen that includes a link for accessing an electronic receipt service; and
a second server that stores a plurality of electronic receipts, each associated with one of a plurality of company IDs and one of a plurality of member IDs, and is configured to:
in response to a second request from the user device for second screen data,
wherein the second request includes the company ID included in the first request and a member ID, and is generated using the link on the displayed company screen for accessing the electronic receipt service,
transmit to the user device, the second screen data including instructions to display on the user device an electronic receipt service home screen that includes a link for requesting electronic receipts, and
in response to a third request from the user device for electronic receipts, wherein the third request includes the member ID included in the second request, and is generated using the link on the displayed electronic receipt service home screen for requesting electronic receipts,
retrieve, from the stored plurality of electronic receipts, the electronic receipts that are associated with the member ID included in the third request and one of the plurality of company IDs associated with the member ID, and
transmit to the user device, third screen data including instructions to display on the user device an electronic receipt list screen that includes a list of each retrieved electronic receipt, wherein the list includes one or more separate links each for requesting one of the retrieved electronic receipts.

2. The system according to claim 1, wherein the second server is further configured to:
in response to a fourth request from the user device for a specific electronic receipt, wherein the fourth request is generated using one of the links from the list on the displayed electronic receipt list screen,
transmit to the user device, the specific electronic receipt.

3. The system according to claim 1 or 2, wherein:
the first screen data is in HTML format, and the link for requesting electronic receipts is a URL that identifies the second server.

4. The system according to any one of claims 1 to 3, wherein:
the second server is further configured to determine whether the third request includes one of the plurality of company IDs, and
when the third request is determined to include one of the plurality of company IDs, the retrieved electronic receipts are electronic receipts that are stored in association with the company ID included in the third request.

5. The system according to claim 4, wherein, when the third request is determined to not include one of the plurality of company IDs, the retrieved electronic receipts are electronic receipts that are stored in association with a company ID included in a previous request received by the second server that included the member ID in the third request.

6. The system according to any one of claims 1 to 5, wherein each of the plurality of company IDs represents an individual store.

7. The system according to any one of claims 1 to 5, wherein each of the plurality of company IDs represents a plurality of associated stores.

8. A method of providing electronic receipt information, the method comprising the steps of:
at a first server, in response to a first request from a user device for first screen data, wherein the first request includes a company ID, transmitting to the user device, the first screen data including instructions to display on the user device a company screen that includes a link for accessing an electronic receipt service;
at a second server that stores a plurality of electronic receipts that are each associated with one of a plurality of company IDs and one of a plurality of member IDs, in response to a second request from the user device for second screen data, wherein the second request includes the company ID included in the first request and a member ID, and is generated using the link on the displayed company screen for accessing the electronic receipt service, transmitting to the user device, the second screen data including instructions to display on the user device an electronic receipt service home screen that includes a link for requesting electronic receipts; and
at the second server, in response to a third request from the user device for electronic receipts, wherein the third request includes the member ID included in the second request, and is generated using the link on the displayed electronic receipt service home screen for requesting electronic receipts, retrieving, from the stored plurality of electronic receipts, the electronic receipts that are associated with the member ID included in the third request and one of the plurality of company IDs associated with the member ID, and transmitting to the user device, third screen data including instructions to display on the user device an electronic receipt list screen that includes a list of each retrieved electronic receipt, wherein the list includes one or more separate links each for requesting one of the retrieved electronic receipts.

9. The method according to claim 8, further comprising the steps of:
at the second server, in response to a fourth request from the user device for a specific electronic receipt, wherein the fourth request is generated using one of the links from the list on the displayed electronic receipt list screen, transmitting to the user device, the specific electronic receipt.

10. The method according to any one of claims 8 to 9, further comprising the step of:
determining whether the third request includes one of the plurality of company IDs,
wherein, when the third request is determined to include one of the plurality of company IDs, the retrieved electronic receipts are electronic receipts that are stored in association with the company ID included in the third request.

11. The method according to claim 10, wherein, when the third request is determined to not include one of the plurality of company IDs, the retrieved electronic receipts are electronic receipts that are stored in association with a company ID included in a previous request received by the second server that included the member ID in the third request.

12. The method according to any one of claims 8 to 11, wherein each of the plurality of company IDs represents an individual store.

13. The method according to any one of claims 8 to 11, wherein each of the plurality of company IDs represents a plurality of associated stores.

14. A non-transitory computer-readable medium having a program thereon that is executable in a computing device to cause the computing device to perform the method of retrieving electronic receipt information according to any one of claims 8 to 13.

15. A computer program product comprising program code means stored on a computer readable medium for performing the method according to any one of claims 8 to 13, when the program product is run on a computer.
